# EUROPÄISCHE PATENTANMELDUNG

(11) **EP 4 559 701 A1**
(43) Veröffentlichungstag der Anmeldung: **28.05.2025**
(21) Anmeldenummer: 24207823.6
(22) Anmeldetag: 21.10.2024
(51) Int. Cl.: B60C 23/20

(54) **VERFAHREN ZUR ERKENNUNG EINER TEMPERATURANOMALIE BEI FAHRZEUGLUFTREIFEN**

(30) Priorität: 22.11.2023 DE 102023211637
(71) Anmelder: Continental Reifen Deutschland GmbH, 30175 Hannover (DE)
(72) Erfinder: Dr. Sahlmüller, Baldo, 30175 Hannover (DE); Dr. Kurz, Martin, 30175 Hannover (DE)
(74) Vertreter: Continental Corporation

(57) **Zusammenfassung**

Die Erfindung betrifft ein Verfahren zur Erkennung einer Temperaturanomalie bei Systemfahrzeugreifen (10), wobei der Systemfahrzeugreifen (10) eine erste Temperatursensoreinheit (16) und eine zweite Temperatursensoreinheit (18) umfasst, welche bezogen auf die axiale Richtung auf unterschiedlichen Seiten der orthogonal zur axialen Richtung stehenden, zentral durch den Systemfahrzeugreifen (10) verlaufenden Ebene AE angeordnet sind, und umfassend die Verfahrensschritte: a) Messen einer zeitabhängigen ersten Reifentemperatur T₁(t1) mit einer ersten elektronischen Temperatursensoreinheit (16) und Messen einer zeitabhängigen zweiten Reifentemperatur T₂(t2) mit der einer elektronischen Temperatursensoreinheit (18) und ermitteln einer zeitabhängigen Temperaturdifferenzbewertungsgröße ΔTB(t3) aus den gemessenen ersten Reifentemperaturen T₁ und den gemessenen zweiten Reifentemperaturen T₂ mit der elektronischen Datenverarbeitungsvorrichtung, und b) Erkennen einer Temperaturanomalie des Systemfahrzeugreifens (10) durch Auswertung der zeitabhängigen Temperaturdifferenzbewertungsgröße ΔTB(t3) mit der elektronischen Datenverarbeitungsvorrichtung, wobei die Temperaturanomalie des Systemfahrzeugreifens (10) erkannt wird, wenn die zeitabhängige Temperaturdifferenzbewertungsgröße ΔTB(t3) anzeigt, dass zumindest eine vorgegebene Änderung der Temperaturdifferenz, zwischen der gemessenen ersten Reifentemperatur T₁ und der gemessenen zweiten Reifentemperatur T₂ vorliegt.

## Beschreibung

Verfahren zur Erkennung einer Temperaturanomalie bei Fahrzeugluftreifen

Die Erfindung betrifft ein Verfahren zur Erkennung einer Temperaturanomalie bei Fahrzeugluftreifen in einem Fahrzeugsystem, ein entsprechendes Fahrzeugsystem sowie einen Systemfahrzeugreifen für den Einsatz in einem solchen Verfahren und/oder einem solchen Fahrzeugsystem.

Moderne Fahrzeugluftreifen sind Hochleistungsprodukte, welche im Zuge der fortschreitenden Entwicklung immer besser an die unterschiedlichen gestellten Herausforderungen angepasst werden. Im Gegensatz hierzu haben sich viele der beim Betrieb von Fahrzeugluftreifen auftretenden Herausforderungen und Belastungen im Laufe der Zeit nicht fundamental verändert. Trotz des technologischen Fortschritts und einer generell gesteigerten Haltbarkeit von Fahrzeugluftreifen können asymmetrische Belastungen im Betrieb zu einem ungleichmäßigen Verschleiß führen, durch welchen die Fahrzeugluftreifen vor dem erwarteten Lebenszeitende unbrauchbar werden.

Zu den relevanten Szenarien, bei denen es zu einem solchen ungleichmäßigen Verschleiß kommen kann, gehört insbesondere ein außerhalb der vorgesehenen Grenzbereiche liegender Reifensturz, welcher zu einem ungewollten Schräglauf des Fahrzeugreifens führt und infolgedessen eine ungleichmäßige Abnutzung bedingen kann. Neben einem zu starken Schräglauf der Reifen, welcher sich beispielsweise aus einer falschen Fahrwerkseinstellung ergeben kann, kann auch ein Entlangschleifen der Fahrzeugreifen an Teilen des Fahrzeuges zu einem unerwünschten zusätzlichen Abrieb führen, welcher die Lebenszeit des Fahrzeugreifens verkürzt.

Aufgrund der zentralen Bedeutung, die dem Abnutzungszustand von Fahrzeugreifen mit Blick auf die Fahrsicherheit sowie die regulatorischen Vorgaben in vielen Ländern zukommt, wurden im Stand der Technik zahlreiche Verfahren entwickelt, um die manuelle Zustandskontrolle der Fahrzeugluftreifen durch den Fahrzeugführer zumindest teilweise zu automatisieren und/oder den Fahrzeugführer bei der Zustandsbewertung zumindest zu unterstützen. Neben externen Verfahren, in welchen der Reifenzustand, beispielsweise die verbleibende Profiltiefe, von außen bestimmt wird, beispielsweise mittels optischer Messverfahren oder mittels Bildauswertung, wurden auch Verfahren entwickelt, mit denen unter Einsatz von im Inneren des Fahrzeugreifens verbauten Reifensensoren Informationen über den Zustand der Fahrzeugreifen abgeleitet werden können.

Ein Beispiel der Informationsgewinnung über den Reifenzustand über integrierte Sensoren stellt dabei beispielsweise die Abschätzung der Profiltiefe dar, welche beispielsweise über die Breite der Bodenaufstandsfläche von Fahrzeugreifen beziehungsweise der Veränderung dieses Wertes mit der Zeit abgeschätzt werden kann, wobei die Breite der Bodenaufstandsfläche beispielsweise unter Einsatz von im Fahrzeugreifen verbauten Beschleunigungssensoren ermittelt werden kann.

Die Abschätzung des Reifenzustandes über im Fahrzeugreifen verbaute, integrierte Sensoren bietet gegenüber externen Messverfahren erhebliche Vorteile, insbesondere wenn die eingesetzten Methoden auf Reifensensoren zurückgreifen, welche aus anderen Gründen ohnehin im Fahrzeugreifen verbaut werden. Hierdurch ist es möglich, die Anforderungen an die für den Bestimmungsprozess notwendigen externen Vorrichtung erheblich zu reduzieren und insbesondere auch möglich, die entsprechenden Beobachtungsgrößen kontinuierlich, insbesondere auch abseits eines Messstandes während der Fahrt zu ermitteln.

Während mit den aus dem Stand der Technik bekannten Methoden, welche auf die Auswertung der internen Reifensensorik setzen, heutzutage bereits viele Reifenzustände vergleichsweise gut detektiert beziehungsweise abgeschätzt werden können, insbesondere ein unzureichender Reifendruck und/oder eine zu starke Abnutzung des Reifenprofils, werden viele der aus dem Stand der Technik bekannten Verfahren hinsichtlich der Feststellung einer ungleichmäßigen Abnutzung als unzureichend empfunden, da sie diese nicht oder nicht mit hinreichender Genauigkeit ermitteln können.

Bewertungsverfahren, welche auf externe Messvorrichtungen setzen, sind im Gegensatz hierzu in vielen Fällen besser geeignet, um einen ungleichmäßigen Abrieb festzustellen. Allerdings ist es mit diesen Verfahren regelmäßig nur möglich, eine bereits erfolgte ungleichmäßige Abnutzung zu attestieren, wobei die Wahrnehmungsschwelle vieler Methoden bedingt, dass eine entsprechende ungleichmäßige Abnutzung häufig erst dann detektiert werden kann, wenn der Schaden bereits irreparabel ist.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein Verfahren anzugeben, mit welchem eine ungleichmäßige Belastung eines Fahrzeugreifens im Betrieb des Fahrzeuges frühzeitig und zuverlässig erkannt werden kann, insbesondere auch während der Fahrt und außerhalb von routinemäßigen Wartungsintervallen.

Insoweit war es eine Aufgabe der vorliegenden Erfindung, dass das anzugebende Verfahren in der Lage sein sollte, eine drohende ungleichmäßige Abnutzung eines Fahrzeugreifens besonders frühzeitig anzuzeigen und damit die frühzeitige Einleitung von Korrekturmaßnahmen zu ermöglichen, durch die eine irreparable Beschädigung des Fahrzeugreifens noch verhindert werden kann.

Insbesondere war es die Aufgabe der vorliegenden Erfindung, dass das anzugebende Verfahren einen ungewollt starken Schräglauf ebenso detektieren können sollte, wie ein Entlangschleifen des Fahrzeugreifens an einem Fahrzeugteil.

Es war eine Aufgabe der vorliegenden Erfindung, dass das anzugebende Verfahren möglichst weitgehend unter Einsatz solcher Vorrichtungen und Elemente durchführbar sein sollte, welche in modernen Fahrzeugluftreifen ohnehin vorgesehen sind.

Es war eine weitere Aufgabe der vorliegenden Erfindung, dass das Verfahren in besonders zeit- und kosteneffizienter Art und Weise ausführbar sein sollte und insbesondere mit einem geringen Bedarf an Rechenkapazität ausführbar sein sollte.

Insoweit war es eine wünschenswerte Vorgabe, dass das anzugebende Verfahren möglichst weitgehend automatisierbar sein sollte, wobei es angestrebt war, dass das anzugebende Verfahren möglichst effizient im Rahmen eines zahlreiche Fahrzeuge umfassenden Überwachungssystems durchführbar sein sollte, beispielsweise im Rahmen eines zentralen Flottenmanagements.

Die Erfinder der vorliegenden Erfindung haben nunmehr gefunden, dass sich die vorstehend beschriebenen Aufgaben lösen lassen, wenn das Auftreten von Temperaturanomalien im Fahrzeugluftreifen mit einer im Fahrzeugreifen verbauten Sensorik registriert wird, wobei zu diesem Zweck zwei separate Temperatursensoren vorgesehen werden, welche beiderseits der zentralen Reifenebene positioniert werden und jeweils die Reifentemperatur messen, wie es in den Ansprüchen definiert ist.

Die Erfinder haben gefunden, dass es durch die Beobachtung des Temperaturgradienten zwischen den beiden Temperatursensoren bzw. dessen zeitlicher Entwicklung möglich ist, eine Temperaturanomalie zu identifizieren, welche mit einem Reifenschräglauf und/oder einem Vorbeischleifen des Fahrzeugreifens an Teilen des Fahrzeuges verknüpft werden kann. Im Fahrbetrieb des Fahrzeuges führen entsprechende ungleichmäßige Belastungen zu einer unterschiedlichen Temperaturentwicklung auf beiden Seiten des Fahrzeugreifens, wobei der Temperaturunterschied in vielen Fällen umso stärker ist, umso schneller das Fahrzeug fährt. Entsprechend lassen sich insbesondere im Abgleich der Temperaturdifferenz im schnelleren Fahrbetrieb des Fahrzeuges im Vergleich zu Stand- und Rangierphasen durch zunehmende Temperaturgradienten zuverlässig Temperaturanomalien identifizieren, wobei sekundäre Einflussfaktoren, wie beispielsweise eine ungleichmäßige Sonneneinstrahlung auf die innere und äußere Reifenseite durch die Betrachtung der zeitabhängigen Temperaturdifferenz relativ weitgehend ausgeblendet werden können. In vorteilhafter Weise können die von den zwei Temperatursensoren detektierten zeitabhängigen Temperaturen dabei sowohl über eine im Fahrzeug integrierte elektronische Datenverarbeitungsvorrichtung ausgewertet werden als auch über eine zentrale Recheneinheit, beispielsweise den Server eines Flottenmanagementsystems.

In vorteilhafter Weise ist es durch dieses Verfahren möglich, einen möglichen Schräglauf oder eine vergleichbare ungleichmäßige Belastung bereits während der Fahrt zu identifizieren, wobei als besonders vorteilhaft angesehen wird, dass sich entsprechende Temperaturanomalien als Indikator einer drohenden ungleichmäßigen Abnutzung bereits zu einem frühen Zeitpunkt zeigen, zu dem der Reifen in vielen Fällen noch nicht irreparabel beschädigt ist, sodass es möglich ist, Gegenmaßnahmen einzuleiten, beispielsweise indem ein am Fahrzeugreifen entlangschleifendes Fahrzeugteil entfernt oder gerichtet wird.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeugsysteme und Systemfahrzeugreifen ergeben sich aus den Merkmalen bevorzugter Verfahren.

Die Erfindung betrifft insbesondere ein Verfahren zur Erkennung einer Temperaturanomalie bei Fahrzeugluftreifen in einem Fahrzeugsystem, umfassend:
i) ein Fahrzeug,
ii) zwei oder mehr am Fahrzeug angeordnete Fahrzeugluftreifen, wobei zumindest einer der Fahrzeugluftreifen ein Systemfahrzeugreifen ist,
   wobei der Systemfahrzeugreifen eine für den Fahrbahnkontakt vorgesehene Lauffläche aufweist und im Inneren einen Reifeninnenraum ausbildet,
   wobei der Systemfahrzeugreifen eine im Reifeninnenraum am Systemfahrzeugreifen angeordnete erste elektronische Temperatursensoreinheit zur Messung einer ersten Reifentemperatur T₁ umfasst,
   wobei der Systemfahrzeugreifen eine im Reifeninnenraum am Systemfahrzeugreifen angeordnete zweite elektronische Temperatursensoreinheit zur Messung einer zweiten Reifentemperatur T₂ umfasst,
   wobei die erste elektronische Temperatursensoreinheit und die zweite elektronische Temperatursensoreinheit bezogen auf die axiale Richtung des Systemfahrzeugreifens auf unterschiedlichen Seiten der orthogonal zur axialen Richtung stehenden, zentral durch den Systemfahrzeugreifen verlaufenden Ebene AE angeordnet sind, und
iii) eine elektronische Datenverarbeitungsvorrichtung, wobei das Fahrzeugsystem dazu eingerichtet ist, dass die gemessene erste Reifentemperatur T₁ und die gemessene zweite Reifentemperatur T₂ an die elektronische Datenverarbeitungsvorrichtung übermittelt werden können,
   umfassend die Verfahrensschritte:
   a) Messen einer zeitabhängigen ersten Reifentemperatur T₁(t1) mit der ersten elektronischen Temperatursensoreinheit und Messen einer zeitabhängigen zweiten Reifentemperatur T₂(t2) mit der zweiten elektronischen Temperatursensoreinheit und ermitteln einer zeitabhängigen Temperaturdifferenzbewertungsgröße ΔTB(t3) aus den gemessenen ersten Reifentemperaturen T₁ und den gemessenen zweiten Reifentemperaturen T₂ mit der elektronischen Datenverarbeitungsvorrichtung, und
   b) Erkennen einer Temperaturanomalie des Systemfahrzeugreifens durch Auswertung der zeitabhängigen Temperaturdifferenzbewertungsgröße ΔTB(t3) mit der elektronischen Datenverarbeitungsvorrichtung, wobei die Temperaturanomalie des Systemfahrzeugreifens erkannt wird, wenn die zeitabhängige Temperaturdifferenzbewertungsgröße ΔTB(t3) anzeigt, dass zumindest eine vorgegebene Änderung der Temperaturdifferenz, zwischen der gemessenen ersten Reifentemperatur T₁ und der gemessenen zweiten Reifentemperatur T₂ vorliegt.

Das erfindungsgemäße Verfahren dient gemäß der vorstehenden Definition der Erkennung einer Temperaturanomalie bei Fahrzeugluftreifen. Diese Formulierung ist dem Umstand geschuldet, dass die Erfinder erkannt haben, dass diese Temperaturanomalien, welche de facto sensorisch ermittelt werden, als Indikatoren für einen unerwünschten Reifenschräglauf oder vergleichbare ungleichmäßige Belastungen des Fahrzeugluftreifens während des Fahrbetriebes sind. Der Fachmann versteht jedoch, dass es sich bei dem Verfahren mittelbar um ein Verfahren zur Erkennung ungleichmäßiger mechanischer Belastung an einem Fahrzeugreifen handelt, wie sie beispielsweise durch einen ungewollten Schräglauf, beispielsweise infolge eines zu großen Reifensturzes oder durch ein Entlangschleifen an anderen Teilen des Fahrzeuges verursacht werden kann. Nach Einschätzung der Erfinder eignen sich das erfindungsgemäße Verfahren dabei insbesondere für eine frühe und zuverlässige Detektion des Schräglaufs. Mittelbar handelt es sich somit um ein erfindungsgemäßes Verfahren, wobei das Verfahren ein Verfahren zur Erkennung einer ungleichmäßigen mechanischen Belastung bei Fahrzeugreifen, insbesondere eines Schräglaufs, in Folge einer ermittelten Temperaturanomalie ist, wobei Verfahrensschritt b) das Erkennen einer ungleichmäßigen mechanischen Belastung des Systemfahrzeugreifens, insbesondere eines Schräglaufs, ausgehend von der erkannten Temperaturanomalie umfasst. Mit anderen Worten ist es mittelbar ein erfindungsgemäßes Verfahren, wobei die erkannte Temperaturanomalie und/oder der zeitlichen Verlauf der erkannten Temperaturanomalie dazu verwendet wird, eine ungleichmäßige mechanischen Belastung bei Fahrzeugreifen, insbesondere eines Schräglaufs des Systemfahrzeugreifens, zu detektieren. Bevorzugt ist zusätzlich oder alternativ ein erfindungsgemäßes Verfahren, wobei das Verfahren ein Verfahren zur Erkennung eines Schräglaufs bei Fahrzeugluftreifen ist. In diesem Fall handelt es sich um ein erfindungsgemäßes Verfahren, wobei die Temperaturanomalie eine durch den Schräglauf des Systemfahrzeugreifens befördert oder bedingte Temperaturanomalie ist.

Das erfindungsgemäße Verfahren wird an einem Fahrzeugsystem durchgeführt, welches gemäß der vorstehenden Definition neben dem Fahrzeug und einer entsprechenden Bereifung auch die elektronische Datenverarbeitungsvorrichtung umfasst, welche zur Auswertung der Sensordaten verwendet wird, sodass das Fahrzeugsystem mehrere Komponenten umfasst.

Das erfindungsgemäße Verfahren eignet sich dabei prinzipiell für alle Arten von Fahrzeugen. Beispielhaft ist ein erfindungsgemäßes Verfahren, wobei das Fahrzeug ein PKW oder ein Nutzfahrzeug, bevorzugt ein PKW oder ein LKW ist. Beispielhaft ist zusätzlich oder alternativ ein erfindungsgemäßes Verfahren, wobei das Fahrzeug vier oder mehr, bevorzugt sechs oder mehr, am Fahrzeug angeordnete Fahrzeugluftreifen umfasst.

Zur Durchführung des erfindungsgemäßen Verfahrens ist zumindest ein sensorbestückter Fahrzeugreifen notwendig. Ein entsprechender Fahrzeugreifen wird im Rahmen der vorliegenden Erfindung zum Zwecke der klaren Zuordnung als Systemfahrzeugreifen bezeichnet. Der Ausdruck "Systemfahrzeugreifen" stellt dabei klar, dass der entsprechende Fahrzeugreifen zu dem Fahrzeugsystem gehört und über die erfindungsgemäß notwendige Sensorik verfügt. Zumindest prinzipiell ist es denkbar, dass ein Fahrzeugsystem am Fahrzeug lediglich einen entsprechenden Systemfahrzeugreifen umfasst, an welchem eine entsprechende Temperaturanomalie detektiert werden könnte. Der Fachmann versteht jedoch zwangslos, dass es bevorzugt ist, möglichst viele der Fahrzeugreifen mit einer für das Verfahren geeigneten Sensorik auszustatten. Bevorzugt ist ein erfindungsgemäßes Verfahren, wobei zwei oder mehr, bevorzugt vier oder mehr, besonders bevorzugt sämtliche der Fahrzeugluftreifen Systemfahrzeugreifen sind. Bevorzugt ist zusätzlich oder alternativ ein erfindungsgemäßes Verfahren, wobei das Verfahren für zwei oder mehr, bevorzugt vier oder mehr, besonders bevorzugt sämtliche der Fahrzeugluftreifen des Fahrzeugs durchgeführt wird.

Gemäß der vorstehenden Definition handelt es sich bei den Systemfahrzeugreifen um Fahrzeugluftreifen. Fahrzeugluftreifen sind dem Fachmann im Bereich der Reifentechnik umfassend vertraut und von zahlreichen Herstellern kommerziell erhältlich. Entsprechende Fahrzeugluftreifen sind im Einsatz am Fahrzeug regelmäßig auf einer Reifenfelge aufgezogen, die zusammen mit dem Fahrzeugluftreifen den luftgefüllten Innenraum ausbildet. Besonders praxisrelevant ist entsprechend ein erfindungsgemäßes Verfahren, wobei der Systemfahrzeugreifen auf einer Reifenfelge angeordnet ist, wobei der Reifeninnenraum zwischen dem Systemfahrzeugreifen und der Reifenfelge liegt.

Der für den Fahrbahnkontakt vorgesehene Teil des Fahrzeugluftreifens wird im Rahmen der vorliegenden Erfindung als Lauffläche bezeichnet. Besonders praxisrelevant ist dabei ein erfindungsgemäßes Verfahren, wobei der Systemfahrzeugreifen auf der für den Fahrbahnkontakt vorgesehene Lauffläche ein Profil aufweist.

Erfindungsgemäß umfasst der Systemfahrzeugreifen eine erste elektronische Temperatursensoreinheit und eine zweite elektronische Temperatursensoreinheit, welche jeweils der Messung der Reifentemperatur an unterschiedlichen Positionen dient. Die elektronischen Temperatursensoreinheiten sind dabei jeweils am Systemfahrzeugreifen angeordnet und stehen entsprechend mit dem Systemfahrzeugreifen in Kontakt, sodass eine Anordnung auf der Felge nicht ausreichend ist. Die Positionierung der elektronischen Temperatursensoreinheiten erfolgt zudem im Reifeninnenraum, wodurch ausgedrückt wird, dass sie auf der Innenseite am Systemfahrzeugreifen angeordnet sind und nicht etwa von außen am Systemfahrzeugreifen angebracht sind. Bei Fahrzeugluftreifen bedeutet diese Anordnung insbesondere, dass die Temperatursensoreinheiten in den meisten Fällen auf der Reifeninnenschicht des Fahrzeugluftreifens positioniert werden. Besonders praxisrelevant ist somit ein erfindungsgemäßes Verfahren, wobei der Systemfahrzeugreifen eine im Inneren angeordnete Reifeninnenschicht umfasst, wobei die erste Temperatursensoreinheit und die zweite Temperatursensoreinheit an der Reifeninnenschicht angeordnet sind.

Gemäß der vorstehenden Definition dienen die elektronischen Temperatursensoreinheiten jeweils der Messung der Reifentemperatur. In Übereinstimmung mit dem fachmännischen Verständnis ist dies die Temperatur des Reifens und nicht etwa die Temperatur der Luft im Reifeninnenraum. Im Lichte der typischen Temperatursensoreinheiten wird es sich in der Praxis in der weit überwiegenden Zahl der Fälle um die jeweilige Reifentemperatur unmittelbar an oder in direkter Nähe zu der Sensorposition handeln.

Wesentlich für das erfindungsgemäße Verfahren ist nun, dass die beiden Temperatursensoreinheiten auf unterschiedlichen Seiten des Fahrzeugluftreifens angeordnet werden, sodass eine der Temperatursensoreinheiten nach Anbringung des Systemfahrzeugreifens am Fahrzeug in Richtung des Fahrzeuges und eine vom Fahrzeug weg weist. Dies wird im Rahmen der vorliegenden Erfindung dadurch ausgedrückt, dass die Temperatursensoreinheiten bezogen auf die von der Rotationsachse des Systemfahrzeugreifens vorgegebene Richtung einmal oberhalb und einmal unterhalb der Ebene AE angeordnet sind, wobei die Ebene AE die Ebene ist, welche orthogonal auf der Rotationsachse des Fahrzeugreifens steht und gleichzeitig zentral durch den Systemfahrzeugreifen verläuft, d.h. durch den Mittelpunkt des Systemfahrzeugreifens. Die entsprechende Anordnung ist erforderlich, damit die Temperatursensoreinheiten einen Temperaturgradienten zwischen der dem Fahrzeug zugewandten und der dem Fahrzeug abgewandten Seite des Systemfahrzeugreifens detektieren können.

Nach Einschätzung der Erfinder hat die Positionierung der Temperatursensoreinheiten im Systemfahrzeugreifen einen entscheidenden Einfluss auf die Leistungsfähigkeit des erfindungsgemäßen Verfahrens, wobei sowohl die absolute Positionierung als auch die Positionierung relativ zueinander optimiert werden kann.

Auch wenn es zumindest theoretisch denkbar wäre, mit den Temperatursensoreinheiten die Temperaturen im Seitenwandbereich des Systemfahrzeugreifens zu beobachten, um beispielsweise ein am Seitenwandbereich entlangschleifendes Bauteil durch eine Temperaturanomalie früh zu registrieren, ist dies nach Einschätzung der Erfinder nicht bevorzugt. Vielmehr schlagen die Erfinder vor, dass es insbesondere zur Detektion eines Schräglaufs des Fahrzeugreifens zielführend ist, die Temperatursensoreinheiten so nah wie möglich in den Bereich der durch die Reibung entstandenen Wärme zu positionieren, um die jeweilige Reifentemperatur möglichst in den Bereichen zu messen, in denen insbesondere der Schräglauf zu der stärksten Temperaturerhöhung führt. Infolgedessen ist es bevorzugt, Temperatursensoreinheiten unterhalb der Lauffläche zu positionieren, wobei insbesondere die Seitenbereiche der Lauffläche, d.h. die Randbereiche bevorzugte Positionen sind, da im Falle eines Reifenschräglaufs hier mit einer besonders starken Temperaturdifferenz gerechnet wird. Im Lichte der vorstehend beschriebenen Anordnung auf beiden Fahrzeugseiten ist es dabei besonders bevorzugt, die Sensoreinheiten jeweils in einem Seitenbereich zu positionieren, d.h. in dem in Richtung Fahrzeug weisenden sowie in dem vom Fahrzeug weg weisenden Seitenbereich. Bevorzugt ist ein erfindungsgemäßes Verfahren, wobei die erste elektronische Temperatursensoreinheit in radialer Richtung unterhalb der Lauffläche angeordnet ist, bevorzugt unterhalb eines der Seitenbereiche der Lauffläche, wobei die Seitenbereiche der Lauffläche bezogen auf die Breite in axialer Richtung jeweils die äußeren 30 %, bevorzugt die äußeren 20 %, besonders bevorzugt die äußeren 10 %, umfassen. Bevorzugt ist zusätzlich oder alternativ ein erfindungsgemäßes Verfahren, wobei die zweite elektronische Temperatursensoreinheit in radialer Richtung unterhalb der Lauffläche angeordnet ist, bevorzugt unterhalb eines der Seitenbereiche der Lauffläche, wobei die Seitenbereiche der Lauffläche bezogen auf die Breite in axialer Richtung jeweils die äußeren 30 %, bevorzugt die äußeren 20 %, besonders bevorzugt die äußeren 10 %, umfassen. Bevorzugt ist zusätzlich oder alternativ ein erfindungsgemäßes Verfahren, wobei die erste elektronische Temperatursensoreinheit und die zweite elektronische Temperatursensoreinheit in radialer Richtung unterhalb gegenüberliegender Seitenbereiche der Lauffläche angeordnet sind.

Insbesondere beim besonders relevanten Fall eines Reifenschräglaufs wird sich der größte Gradient der Temperatur in den meisten Fällen in etwa zwischen den Reifenschultern einstellen. Insbesondere unter Berücksichtigung der Wärmeleitfähigkeit des Fahrzeugreifens ist es für eine präzise Bestimmung der Temperaturanomalie wünschenswert, den bestehenden Temperaturgradienten möglichst gut zu erfassen, und insbesondere eine hinreichende Auflösung zwischen den beiden Temperatursensoreinheiten zu ermöglichen. Insoweit wird vorgeschlagen, dass die Temperatursensoreinheiten bezogen auf die axiale Richtung möglichst weit voneinander beabstandet werden sollten, sodass diese in anderen Worten einen betragsmäßig möglichst großen Abstand von der axialen Ebene AE aufweisen sollten, wodurch ein erfindungsgemäßes Verfahren erhalten wird, welches besonders zuverlässig und insbesondere auch besonders frühzeitig eine Temperaturanomalie erkennen kann. Als Alternative zu der Definition über den Abstand zur Ebene AE kann auch der Orientierungswinkel der jeweiligen Temperatursensoreinheiten definiert werden, womit jeweils der Schnittwinkel zwischen der Ebene AE und der Geraden bezeichnet wird, die die jeweilige Temperatursensoreinheit mit dem Mittelpunkt des Reifens verbindet. Bevorzugt ist ein erfindungsgemäßes Verfahren, wobei die erste elektronische Temperatursensoreinheit so am Systemfahrzeugreifen angeordnet ist, dass der Abstand zu der orthogonal zur axialen Richtung stehenden, zentral durch den Systemfahrzeugreifen verlaufenden Ebene AE mehr als 0,2*B, bevorzugt mehr als 0,25*B, besonders bevorzugt mehr als 0,3*B, ganz besonders bevorzugt 0,35*B, beträgt, wobei B die maximale Breite des Systemfahrzeugreifens in axialer Richtung ist. Bevorzugt ist zusätzlich oder alternativ ein erfindungsgemäßes Verfahren, wobei die zweite elektronische Temperatursensoreinheit so am Systemfahrzeugreifen angeordnet ist, dass der Abstand zu der orthogonal zur axialen Richtung stehenden, zentral durch den Systemfahrzeugreifen verlaufenden Ebene AE mehr als 0,2*B, bevorzugt mehr als 0,25*B, besonders bevorzugt mehr als 0,3*B, ganz besonders bevorzugt 0,35*B, beträgt, wobei B die maximale Breite des Systemfahrzeugreifens in axialer Richtung ist.

Bevorzugt ist auch ein erfindungsgemäßes Verfahren, wobei die erste elektronische Temperatursensoreinheit so am Systemfahrzeugreifen angeordnet ist, dass die Verbindungslinie zwischen der ersten elektronischen Temperatursensoreinheit und dem Mittelpunkt des Systemfahrzeugreifens mit der orthogonal zur axialen Richtung stehenden, zentral durch den Systemfahrzeugreifen verlaufenden Ebene AE einen ersten Orientierungswinkel im Bereich von 3° bis 30°, bevorzugt im Bereich von 6° bis 25°, besonders bevorzugt im Bereich von 9° bis 20°, liegt. Bevorzugt ist zusätzlich oder alternativ ein erfindungsgemäßes Verfahren, wobei die zweite elektronische Temperatursensoreinheit so am Systemfahrzeugreifen angeordnet ist, dass die Verbindungslinie zwischen der zweite elektronischen Temperatursensoreinheit und dem Mittelpunkt des Systemfahrzeugreifens mit der orthogonal zur axialen Richtung stehenden, zentral durch den Systemfahrzeugreifen verlaufenden Ebene AE einen zweiten Orientierungswinkel im Bereich von 3° bis 30°, bevorzugt im Bereich von 6° bis 25°, besonders bevorzugt im Bereich von 9° bis 20°, liegt.

Unabhängig davon, ob der Abstand zwischen den Temperatursensoreinheiten in axialer Richtung über den Abstand zur Ebene AE und/oder über den Orientierungswinkel ausgedrückt wird, ist es nach Einschätzung der Erfinder zweckmäßig, einen möglichst gleichen Abstand von der Ebene AE beziehungsweise Orientierungswinkel einzustellen. Bevorzugt ist entsprechend ein erfindungsgemäßes Verfahren, wobei die erste elektronische Temperatursensoreinheit und die zweite elektronische Temperatursensoreinheit jeweils einen Abstand zu der orthogonal zur axialen Richtung stehenden, zentral durch den Systemfahrzeugreifen verlaufenden Ebene AE aufweisen, der sich um 10 % oder weniger, bevorzugt 5 % oder weniger, besonders bevorzugt 1 % oder weniger, ganz besonders bevorzugt im Wesentlichen um 0 %, unterscheidet. Bevorzugt ist zusätzlich oder alternativ ein erfindungsgemäßes Verfahren, wobei sich der erste Orientierungswinkel und der zweite Orientierungswinkel um 5° oder weniger, bevorzugt um 2° oder weniger, besonders bevorzugt um 1° oder weniger, ganz besonders bevorzugt im Wesentlichen um 0° unterscheiden.

Die Erfinder haben erkannt, dass das Bestreben, einen gegebenenfalls zwischen der Reifenvorderseite und Reifenrückseite auftretenden Temperaturgradienten mit den zwei Temperatursensoreinheiten möglichst zuverlässig zu bestimmen durch die Temperaturleitung im Fahrzeugluftreifen beeinträchtigt werden kann. Insoweit haben die Erfinder erkannt, dass besonders gute Ergebnisse mit einer besonders hohen Auflösung von Temperaturunterschieden zwischen den Reifentemperaturen dann erreicht werden, wenn die Temperatursensoreinheiten möglichst weit voneinander beabstandet werden, was in vorteilhafter Weise durch eine Beabstandung über den Umfang realisiert werden kann. Idealerweise werden die Sensoren hierbei im Wesentlichen azimutal um im Wesentlichen 180° verschoben angeordnet, um die beiden Messungen möglichst unabhängig von möglicher Temperaturleitung im Gummi zu halten. Eine entsprechende vorteilhafte Beabstandung kann dabei zweckmäßigerweise entweder absolut in Bezug auf den Kreisumfang oder, besonders bevorzugt in Bezug auf die Winkelposition, erfolgen. Die entsprechende Definition ist für den Fachmann zwanglos verständlich. Bei der Draufsicht auf den Systemfahrzeugreifen entlang der Rotationsachse schließen die jeweiligen Verbindungslinien zwischen der Rotationsachse und der jeweiligen Temperatursensoreinheit einen Schnittwinkel ein, wobei der kleinere der Schnittwinkel dem Unterschied in der Winkelposition entspricht. Bevorzugt ist ein erfindungsgemäßes Verfahren, wobei die erste elektronische Temperatursensoreinheit und die zweite elektronische Temperatursensoreinheit entlang der Umfangsrichtung voneinander beabstandet sind, bevorzugt um 0,1 *U oder mehr, besonders bevorzugt um 0,2*U oder mehr, ganz besonders bevorzugt um 0,3*U oder mehr, überaus bevorzugt um 0,4*U oder mehr, insbesondere bevorzugt um im Wesentlichen 0,5*U, wobei U der Umfang des Kreises ist, dessen Radius dem Abstand der ersten elektronischen Temperatursensoreinheit von der Rotationsachse des Systemfahrzeugreifens entspricht. Bevorzugt ist zusätzlich oder alternativ ein erfindungsgemäßes Verfahren, wobei die erste elektronische Temperatursensoreinheit und die zweite elektronische Temperatursensoreinheit in der Betrachtung entlang der Rotationsachse in gegenüberliegenden Quadranten liegen. Bevorzugt ist zusätzlich odr alternativ ein erfindungsgemäßes Verfahren, wobei die erste elektronische Temperatursensoreinheit und die zweite elektronische Temperatursensoreinheit in der Betrachtung entlang der Rotationsachse Winkelpositionen aufweisen, die sich um 45° oder mehr, bevorzugt um 90° oder mehr, besonders bevorzugt um 135° oder mehr, ganz besonders bevorzugt um im Wesentlichen 180°, unterscheiden.

Es kann als Vorteil des erfindungsgemäßen Verfahrens gesehen werden, dass dieses hinsichtlich der Funktionsweise der Temperatursensoreinheiten nicht beschränkt ist, sodass prinzipiell alle Arten von kommerziell verfügbaren Temperatursensoreinheiten, mit denen die Reifentemperaturen geeigneterweise bestimmt werden können, verwendet werden können. Nach Einschätzung der Erfinder ist es dabei mit Blick auf die Herstellbarkeit entsprechender Systemfahrzeugreifen und im Lichte der Bestrebung, die Zahl der notwendigen Komponenten möglichst gering zu halten, besonders bevorzugt, die Temperatursensoreinheiten möglichst gleichartig auszuführen. Bevorzugt ist folglich ein erfindungsgemäßes Verfahren, wobei die erste elektronische Temperatursensoreinheit und/oder die zweite elektronische Temperatursensoreinheit, bevorzugt die erste elektronische Temperatursensoreinheit und die zweite elektronische Temperatursensoreinheit, ausgewählt sind aus der Gruppe bestehend aus Thermoelementen. Bevorzugt ist zusätzlich oder alternativ in erfindungsgemäßes Verfahren, wobei die erste elektronische Temperatursensoreinheit und die zweite elektronische Temperatursensoreinheit baugleich sind.

Auch wenn es prinzipiell denkbar wäre, zur Durchführung des erfindungsgemäßen Verfahrens lediglich Temperatursensoreinheiten vorzusehen, ist es mit Blick auf die Gesamtleistungsfähigkeit der Systemfahrzeugreifen und der an diesen detektierbaren Messgrößen besonders bevorzugt, in den elektronischen Temperatursensoreinheiten zumindest teilweise auch weitere Sensorfunktionalitäten vorzusehen, insbesondere zum Reifendruck und/oder zur Beschleunigungsmessung. Hierdurch ist es möglich, durch effiziente Bauteilintegration in synergistischer Weise neben dem Erkennen von Temperaturanomalien auch weitere für den Fahrbetrieb und die Fahrsicherheit relevante Parameter zu überwachen, wobei insbesondere durch den Einsatz von Beschleunigungssensoren auch Verfahren zur Abschätzung der Profiltiefe durchgeführt werden können, welche sich mit dem vorliegenden erfindungsgemäßen Verfahren in vorteilhafter Weise kombinieren lassen, um einen möglichst weitgehenden Eindruck über den Abnutzungszustand der Fahrzeugreifen zu erhalten. Bevorzugt ist ein erfindungsgemäßes Verfahren, wobei die erste elektronische Temperatursensoreinheit eine erste weitere Sensoreinheit umfasst, wobei die erste weitere Sensoreinheit bevorzugt ausgewählt ist aus der Gruppe bestehend aus Drucksensoren und Beschleunigungssensoren, bevorzugt Drucksensoren, und/oder wobei die zweite elektronische Temperatursensoreinheit eine zweite weitere Sensoreinheit umfasst, wobei die zweite weitere Sensoreinheit bevorzugt ausgewählt ist aus der Gruppe bestehend aus Drucksensoren und Beschleunigungssensoren, bevorzugt Drucksensoren.

Das erfindungsgemäß einzusetzende Fahrzeugsystem umfasst eine elektronische Datenverarbeitungsvorrichtung. Diese ist bevorzugt im oder am Fahrzeug angeordnet, wo sie beispielsweise durch den Fahrzeugcomputer gebildet werden kann. Insbesondere im Zusammenhang mit umfassenderen Reifenmanagementsystemen, gerade im Zuge der Verwaltung von Nutzfahrzeugflotten, kann es jedoch auch zweckmäßig sein, lediglich die Reifentemperaturen an eine vom Fahrzeug separate elektronische Datenverarbeitungsvorrichtung zu übermitteln, und die notwendigen Berechnungen außerhalb des Fahrzeuges durchzuführen, beispielsweise in einer Cloud. Bevorzugt ist ein erfindungsgemäßes Verfahren, wobei die elektronische Datenverarbeitungsvorrichtung im oder am Fahrzeug angeordnet ist, oder wobei die elektronische Datenverarbeitungsvorrichtung außerhalb des Fahrzeuges angeordnet ist, wobei die elektronische Datenverarbeitungsvorrichtung bevorzugt durch eine zentrale Datenverarbeitungseinrichtung gebildet wird, bevorzugt einen zentralen Server oder eine Cloud, wobei die elektronische Datenverarbeitungsvorrichtung bevorzugt Bestandteil eines Reifenmanagementsystems ist.

Der Fachmann versteht, dass die von den Temperatursensoreinheiten gemessenen Reifentemperaturen oder eine davon abgeleitete Größe an die elektronische Datenverarbeitungsvorrichtung übermittelt werden müssen, da diese die notwendigen Kalkulationen durchführen soll. Dies wird vorstehend dadurch definiert, dass das Fahrzeugsystem dazu eingerichtet ist, die entsprechenden Reifentemperaturen an die elektronische Datenverarbeitungsvorrichtung zu übermitteln. Aus dem Stand der Technik sind insoweit sowohl für fahrzeugseitige Datenverarbeitungsvorrichtungen als auch für externe Datenverarbeitungsvorrichtungen wie Server umfassende Kommunikationsinfrastrukturen bekannt, mit denen die entsprechende Funktionalität umgesetzt werden kann, beispielsweise mittels einer kurzreichweitigen Kommunikation mittels Bluetooth oder vergleichbarer Technologien. Hiervon ausgehend können die übermittelten Reifentemperaturen, sofern diese nicht im Fahrzeug selbst ausgewertet werden sollen, bei Bedarf auch mittels langreichweitiger Datenübertragungsverfahren übermittelt werden, wobei es prinzipiell auch möglich ist, die Daten aus den Temperatursensoreinheiten direkt mittels langreichweitiger Kommunikationsverfahren zu übertragen, wobei dies zuweilen hinsichtlich des benötigten Energiebedarfs als nachteilig gesehen wird. Ungeachtet des zur drahtlosen Datenverarbeitung verwendeten Verfahrens werden die Temperatursensoreinheiten in der weit überwiegenden Zahl der Fälle entsprechende Sendeeinheiten umfassen, mit denen sie Signale senden können, wobei es für viele Anwendungsfälle bevorzugt ist, wenn die Temperatursensoreinheiten darüber hinaus auch eine Empfangsfunktionalität umfassen, mit der sie entsprechende Signale empfangen können, welche beispielsweise von der elektronischen Datenverarbeitungsvorrichtung ausgesandt werden. Es handelt sich somit um ein erfindungsgemäßes Verfahren, wobei das Fahrzeugsystem dazu eingerichtet ist, dass die gemessene erste Reifentemperatur T₁ und die gemessene zweite Reifentemperatur T₂ mit einem drahtlosen Datenübertragungsverfahren an die elektronische Datenverarbeitungsvorrichtung übermittelt werden können. Besonders praxisrelevant ist somit ein erfindungsgemäßes Verfahren, wobei die erste elektronische Temperatursensoreinheit und/oder die zweite elektronische Temperatursensoreinheit, bevorzugt die erste elektronische Temperatursensoreinheit und die zweite elektronische Temperatursensoreinheit eine elektronische Sendeeinheit, bevorzugt eine elektronische Sende- und Empfangseinheit, zum Senden von Signalen in einem drahtlosen Datenübertragungsverfahren, bevorzugt einem Funkverfahren, umfassen.

Ausgehend von dem vorstehend beschriebenen Fahrzeugsystem wird nunmehr das erfindungsgemäße Verfahren durchgeführt. In Verfahrensschritt a) werden hierbei mit den beiden Temperatursensoreinheiten jeweils die Reifentemperaturen ermittelt, wobei die Ermittlung so erfolgt, dass eine zeitabhängige Information erhalten wird. Der Fachmann versteht, dass es das Ziel der zeitabhängigen Datenerfassung ist, die Entwicklung der Reifentemperaturen mit der Zeit nachvollziehen zu können. Auch wenn es mit Blick auf die zur Auswertung zur Verfügung stehende Datenmenge prinzipiell bevorzugt wäre, die Reifentemperaturen jeweils im Wesentlichen kontinuierlich zu erfassen, ist es unter Berücksichtigung der zumeist begrenzten Energiespeicher in üblichen Reifensensoren bevorzugt, in spürbaren zeitlichen Abständen die entsprechenden Reifentemperaturen zu bestimmen und dadurch eine Zeitreihe zu erhalten. Bevorzugt ist ein erfindungsgemäßes Verfahren, wobei das Messen der zeitabhängigen ersten Reifentemperatur T₁(t1) das Messen einer Vielzahl von ersten Reifentemperaturen T₁ zu unterschiedlichen Messzeitpunkten umfasst. Bevorzugt ist zusätzlich oder alternativ ein erfindungsgemäßes Verfahren, wobei das Messen der zeitabhängigen zweiten Reifentemperatur T₂(t2) das Messen einer Vielzahl von zweiten Reifentemperaturen T₂ zu unterschiedlichen Messzeitpunkten umfasst.

In besonders einfach umzusetzenden Ausgestaltungen schlagen die Erfinder vor, dass die Messwertaufnahme in vorbestimmten zeitlichen Abständen erfolgen kann. Bevorzugt ist ein erfindungsgemäßes Verfahren, wobei das Messen der zeitabhängigen ersten Reifentemperatur T₁(t1) in vorbestimmten zeitlichen Abständen erfolgt. Bevorzugt ist zusätzlich oder alternativ ein erfindungsgemäßes Verfahren, wobei das Messen der zeitabhängigen zweiten Reifentemperatur T₂(t2) in vorbestimmten zeitlichen Abständen erfolgt.

Als Alternative zu fortgesetzten Messungen in vorgegebenen zeitlichen Abständen kann die Messung auch an eine Auslösebedingung gekoppelt werden, wodurch in vorteilhafter Weise eine bedarfsgerechtere Messung mit einer verringerten Zahl an Einzelmessungen möglich wird, durch die sich ein vorteilhafterer Energieverbrauch realisieren lässt. Hinsichtlich der Auslösebedingung ist der Fachmann bei der Konzeption frei. Die Erfinder schlagen insoweit vor, dass die Auslösebedingung beispielsweise an ein Auslösesignal gekoppelt werden kann, welches das Fahrzeugsystem an die Systemfahrzeugreifen aussendet, um diese jeweils zur Messung zu veranlassen, sodass die Messwertaufnahme in vorteilhafter Weise von außen steuerbar ist. In besonders bevorzugten Ausgestaltungen können jedoch auch weitere Messwerte, welche von anderen im Systemfahrzeugreifen verbauten Sensoreinheiten erfasst werden, genutzt werden, um die Temperaturmessung zu veranlassen. Hierbei ist es nach Einschätzung der Erfinder besonders vielversprechend, die Messung der Reifentemperatur auf den Fahrzustand des Fahrzeugs abzustimmen, was in vorteilhafter Weise über Beschleunigungssensoren in den Systemfahrzeugreifen erfasst werden kann. Bevorzugt ist ein erfindungsgemäßes Verfahren, wobei das Messen der zeitabhängigen ersten Reifentemperatur T₁ (t1) in Folge des Eintretens einer vorbestimmten Auslösebedingung erfolgt. Bevorzugt ist zusätzlich oder alternativ ein erfindungsgemäßes Verfahren, wobei das Messen der zeitabhängigen zweiten Reifentemperatur T₂(t2) in Folge des Eintretens einer vorbestimmten Auslösebedingung erfolgt. Bevorzugt ist insoweit ein erfindungsgemäßes Verfahren, wobei die vorbestimmte Auslösebedingung bevorzugt erfüllt ist, wenn ein Auslösesignal des Fahrzeugsystems empfangen wird und/oder ein mit einer weiteren Sensoreinheit detektierter Messwert ein vorbestimmtes Kriterium erfüllt.

Unabhängig davon, auf welchem Weg die Abstände zwischen einzelnen Messungen festgelegt werden, beispielsweise durch vorgegebene zeitliche Abstände oder einen externen Trigger weisen die Erfinder darauf hin, dass ein Zielkonflikt zwischen der Lebensdauer der in den Sensoreinheiten verbauten Batterien und der Nutzbarkeit der gemessenen Reifentemperaturen besteht.

Mit Blick auf einen möglichst vorteilhaften Energieverbrauch sollte prinzipiell nicht zu häufig gemessen werden. Bevorzugt ist ein erfindungsgemäßes Verfahren, wobei das Messen der zeitabhängigen ersten Reifentemperatur T₁(t1) in zeitlichen Abständen von 2 s oder mehr, bevorzugt 4 s oder mehr, besonders bevorzugt 8 s oder mehr, erfolgt. wobei das Messen der zeitabhängigen zweiten Reifentemperatur T₂(t2) in zeitlichen Abständen von 2 s oder mehr, bevorzugt 4 s oder mehr, besonders bevorzugt 8 s oder mehr, erfolgt.'

Gleichzeitig sollten die Intervalle auch nicht zu groß gewählt werden, da in diesem Fall, trotz des zumeist recht trägen Temperaturverhaltens von Fahrzeugluftreifen, äußere Faktoren, welche nicht auf die ungleichmäßige mechanische Belastung zurückzuführen sind, eine zunehmende Bedeutung gewinnen und die allgemeine Auflösung des Verfahrens sinkt. Dies gilt insbesondere, wenn die Messzeitpunkte der Temperatursensoreinheiten nicht oder nur unzureichend synchronisiert sind. In diesen Fällen können sehr lange Abstände zwischen den Messpunkten dazu führen, dass externe Einflussfaktoren und veränderte Bedingungen einen stärkeren Einfluss auf die Temperaturgradienten ausüben und dadurch die Messung verfälschen. Bevorzugt ist ein erfindungsgemäßes Verfahren, wobei das Messen der zeitabhängigen ersten Reifentemperatur T₁ (t1) in zeitlichen Abständen von 128 s oder weniger, bevorzugt 64 s oder weniger, besonders bevorzugt 32 s oder weniger, ganz besonders bevorzugt 16 s oder weniger, erfolgt. Bevorzugt ist zusätzlich oder alternativ ein erfindungsgemäßes Verfahren, wobei das Messen der zeitabhängigen zweiten Reifentemperatur T₂(t2) in zeitlichen Abständen von 128 s oder weniger, bevorzugt 64 s oder weniger, besonders bevorzugt 32 s oder weniger, ganz besonders bevorzugt 16 s oder weniger, erfolgt.

Im Lichte der vorstehenden Ausführungen versteht der Fachmann, dass es grundsätzlich besonders anstrebenswert ist, die Messungen idealerweise so synchronisiert wie möglich durchzuführen, insbesondere wenn mit Blick auf den Energieverbrauch längere Intervalle gewählt werden müssen. Bevorzugt ist ein erfindungsgemäßes Verfahren, wobei das Messen der zeitabhängigen ersten Reifentemperatur T₁(t1) und das Messen der zeitabhängigen zweiten Reifentemperatur T₂(t2) jeweils in zeitlichen Abständen erfolgt, die sich um weniger als 10 %, bevorzugt weniger als 5 %, besonders bevorzugt weniger als 1 %, insbesondere bevorzugt im Wesentlichen um 0 %, unterscheiden. Bevorzugt ist zusätzlich oder alternativ ein erfindungsgemäßes Verfahren, wobei das Messen der zeitabhängigen ersten Reifentemperatur T₁(t1) und das Messen der zeitabhängigen zweiten Reifentemperatur T₂(t2) jeweils in zeitlichen Abständen erfolgt, die sich um 2*T oder weniger, bevorzugt um 1,5*T oder weniger, besonders bevorzugt um 1*T oder weniger, unterscheiden, wobei T die Umlaufdauer des Systemfahrzeugreifens im Betrieb des Fahrzeuges ist. Bevorzugt ist wiederum zusätzlich oder alternativ ein erfindungsgemäßes Verfahren, wobei das Messen der zeitabhängigen ersten Reifentemperatur T₁(t1) und das Messen der zeitabhängigen zweiten Reifentemperatur T₂(t2) jeweils in zeitlichen Abständen erfolgt, die sich um 64 s oder weniger, bevorzugt um 32 s oder weniger, besonders bevorzugt 16 s oder weniger, ganz besonders bevorzugt 8 s oder weniger, besonders bevorzugt um 4 s oder weniger, unterscheiden. Bevorzugt ist zusätzlich oder alternativ auch ein erfindungsgemäßes Verfahren, wobei das Messen der zeitabhängigen ersten Reifentemperatur T₁(t1) und das Messen der zeitabhängigen zweiten Reifentemperatur T₂(t2) jeweils in Folge der gleichen Auslösebedingung erfolgt.

Ausgehend von den gemessenen Reifentemperaturen wird in Verfahrensschritt a) eine sogenannte Temperaturdifferenzbewertungsgröße ermittelt. Infolge der Ermittlung aus zwei zeitabhängigen Reifentemperaturen ist auch die Temperaturdifferenzbewertungsgröße selbst zeitabhängig. In der weit überwiegenden Zahl wird die Temperaturdifferenzbewertungsgröße tatsächlich die zeitabhängige Temperaturdifferenz zwischen der ersten und zweiten Reifentemperatur sein, was insbesondere hinsichtlich der benötigten Rechenkapazität besonders leicht umzusetzen ist. Die Formulierung über die Temperaturdifferenzbewertungsgröße trägt jedoch dem Umstand Rechnung, dass in Übereinstimmung mit dem fachmännischen Verständnis neben der tatsächlichen Temperaturdifferenz auch andere, davon abgeleitete Größen betrachtet werden können, beispielsweise die Differenz der Kehrwerte der Reifentemperaturen, ohne dass sich hieraus eine Abweichung von der erfinderischen Idee ergibt. Bevorzugt ist ein erfindungsgemäßes Verfahren, wobei die zeitabhängigen Temperaturdifferenzbewertungsgröße ΔTB(t3) die zeitabhängige Temperaturdifferenz zwischen der ersten Reifentemperatur T₁ und der zweiten Reifentemperatur T₂ oder eine mit der zeitabhängige Temperaturdifferenz korrelierende Größe, bevorzugt die zeitabhängige Temperaturdifferenz, ist.

Die zeitabhängige Temperaturdifferenzbewertungsgröße umfasst an jedem Datenpunkt einen Temperaturdifferenzwert, der direkt oder indirekt die Temperaturdifferenz zwischen der ersten Reifentemperatur und der zweiten Reifentemperatur beschreibt. Da die Messzeitpunkte der ersten Reifentemperatur (t1) und die Messzeitpunkte der zweiten Reifentemperatur (t2) nicht zwangsläufig identisch sind, fallen auch die Zeitwerte der Datenpunkte der zeitabhängigen Temperaturdifferenzbewertungsgröße (t3) nicht zwangsläufig mit den Zeitpunkten der zeitabhängigen Reifentemperaturen zusammen, wobei es beispielsweise möglich ist, für t3 den Mittelwert zwischen den Messzeitpunkten t1 und t2 zu wählen, zwischen denen die Temperaturdifferenz bestimmt wird. Bevorzugt ist ein erfindungsgemäßes Verfahren, wobei die zeitabhängigen Temperaturdifferenzbewertungsgröße ΔTB(t3) eine Vielzahl von Temperaturdifferenzen zwischen der ersten Reifentemperatur T₁ und der zweiten Reifentemperatur T₂ zu unterschiedlichen Ermittlungszeitpunkten umfasst. Bevorzugt ist zusätzlich oder alternativ ein erfindungsgemäßes Verfahren, wobei die zeitabhängigen Temperaturdifferenzbewertungsgröße ΔTB(t3) zu jedem Ermittlungszeitpunkt aus der aktuellsten gemessenen ersten Reifentemperatur T₁ und der aktuellsten gemessenen zweiten Reifentemperatur T₂ ermittelt wird.

Um zu verhindern, dass ein Temperaturdifferenzbewertungswert erhalten wird, welcher infolge eines zu großen zeitlichen Abstandes zwischen der Messung der ersten und der zweiten Reifentemperatur nur eine geringe Aussagekraft hätte, wird vorgeschlagen, für die Ermittlung der Temperaturdifferenzbewertungsgröße einen Höchstabstand zwischen den Messwerten vorzusehen. Bevorzugt ist ein erfindungsgemäßes Verfahren, wobei die zeitabhängige Temperaturdifferenzbewertungsgröße ΔTB(t3) zu einem Ermittlungszeitpunkt nicht ermittelt wird, wenn der Messzeitpunkt der aktuellsten gemessenen ersten Reifentemperatur T₁ und der aktuellsten gemessenen zweiten Reifentemperatur T₂ um 256 s oder mehr, bevorzugt 192 s oder mehr, besonders bevorzugt 128 s oder mehr, auseinanderliegen.

Der Fachmann versteht, dass die Temperaturanomalien, welche im erfindungsgemäßen Verfahren erkannt werden sollen, im Stand des Fahrzeuges nicht auftreten, da der Reifen weder schräg läuft noch an einem Bauteil entlangschleifen kann. Für im Wesentlichen alle Ausführungsformen relevant ist ein erfindungsgemäßes Verfahren, wobei das Verfahren im Betrieb des Fahrzeugs durchgeführt wird.

Auch wenn es für die Detektion der Temperaturanomalie notwendig ist, dass das Verfahren im Betrieb des Fahrzeuges, d.h. in Bewegung durchgeführt wird, ist es nach Einschätzung der Erfinder besonders zweckmäßig, im erfindungsgemäßen Verfahren auch in solchen Betriebszeiten Temperaturen zu erfassen, in denen das Fahrzeug steht beziehungsweise mit sehr geringer Geschwindigkeit fährt. Wie vorstehend erläutert, äußern sich Temperaturanomalien insbesondere in einer Veränderung der zeitabhängigen Temperaturdifferenzbewertungsgröße, wobei diese Veränderung insbesondere bei unterschiedlichen Geschwindigkeiten zutage tritt. Insoweit zeigen sich Temperaturanomalien dann besonders deutlich, wenn auch Daten über die Temperaturdifferenz in Zuständen verfügbar sind, in denen ein Schräglauf, ein Entlangschleifen oder eine andere mechanische Belastung nur zu einer vergleichsweise geringen Temperaturerhöhung im Fahrzeugreifen führt. Bevorzugt ist ein erfindungsgemäßes Verfahren, wobei die zeitabhängigen Temperaturdifferenzbewertungsgröße ΔTB(t3) teilweise Temperaturdifferenzbewertungsgrößen umfasst, welche aus ersten Reifentemperaturen T₁ und aus zweiten Reifentemperaturen T₂ ermittelt wurde, welche zu Messzeitpunkten gemessen wurden, zu denen die Geschwindigkeit des Fahrzeuges 5 km/h oder weniger, bevorzugt 2 km/h oder weniger, besonders bevorzugt 1 km/h oder weniger, ganz besonders bevorzugt im Wesentlichen 0 km/h oder weniger, beträgt.

In Verfahrensschritt b) erfolgt nun das Erkennen der Temperaturanomalie, wobei dies durch die Auswertung der zeitabhängigen Temperaturdifferenzbewertungsgröße erfolgt, die die elektronische Datenverarbeitungsvorrichtung vornimmt. Hierfür wird von der elektronischen Datenverarbeitungsvorrichtung geprüft, ob die zeitabhängige Temperaturdifferenzbewertungsgröße anzeigt, dass eine vorgegebene Änderung der Temperaturdifferenz zwischen der ersten Reifentemperatur und der zweiten Reifentemperatur überschritten wird, was in den Fällen, in denen die Temperaturdifferenzbewertungsgröße durch die Temperaturdifferenz gebildet wird, sehr unmittelbar aus den zeitabhängigen Temperaturdifferenzdaten ableitbar ist. Gleichzeitig stellt es für den Fachmann kein Problem dar, ein entsprechendes Kriterium aufzustellen, was auf die von ihm verwendete Temperaturdifferenzbewertungsgröße zutreffend ist, wenn die der Temperaturdifferenzbewertungsgröße zugrunde liegende Temperaturdifferenz die vorgegebene Änderung erfährt. Bevorzugt ist ein erfindungsgemäßes Verfahren, wobei die Temperaturanomalie des Systemfahrzeugreifens erkannt wird, wenn die zeitabhängige Temperaturdifferenzbewertungsgröße ΔTB(t3) anzeigt, dass die vorgegebene absolute Änderung der Temperaturdifferenz und/oder die vorgegebene relative Änderung der Temperaturdifferenz, gegenüber einem im Stand des Fahrzeugs bestimmten Ausgangswerts vorliegt.

In besonders einfachen Ausgestaltungen kann eine Zunahme der Temperaturdifferenz um einen absoluten Wert, beispielsweise 10 K definiert werden. Alternativ kann jedoch auch eine relative Änderung definiert werden, beispielsweise eine Zunahme der Temperaturdifferenz um 50% oder mehr. Bevorzugt ist ein erfindungsgemäßes Verfahren, wobei die Temperaturanomalie des Systemfahrzeugreifens erkannt wird, wenn die zeitabhängige Temperaturdifferenzbewertungsgröße ΔTB(t3) anzeigt, dass eine vorgegebene absolute Änderung der Temperaturdifferenz und/oder eine vorgegebene relative Änderung der Temperaturdifferenz, zwischen der gemessenen ersten Reifentemperatur T₁ und der gemessenen zweiten Reifentemperatur T₂ vorliegt. Bevorzugt ist zusätzlich oder alternativ ein erfindungsgemäßes Verfahren, wobei die vorgegebene absolute Änderung der Temperaturdifferenz 5 K oder mehr, bevorzugt 10 K oder mehr, beträgt. Bevorzugt ist zusätzlich oder alternativ ein erfindungsgemäßes Verfahren, wobei die vorgegebene relative Änderung der Temperaturdifferenz 10 % oder mehr, bevorzugt 20 % oder mehr, besonders bevorzugt 50 % oder mehr, beträgt.

Nach Einschätzung der Erfinder sind es, insbesondere bei langen Messabständen der Temperaturmessungen, insbesondere starke äußere Witterungseinflüsse, die die Zuverlässigkeit des erfindungsgemäßen Verfahrens nachteilig beeinflussen können, beispielsweise infolge von sehr hohen oder niedrigen Umgebungstemperaturen, Kühleffekten wegen nasser Fahrbahnen oder Auswirkungen besonders starker Sonneneinstrahlungen, welche ungleichmäßig auf die am Fahrzeug angeordneten Systemfahrzeugreifen einwirken können. Zur Lösung der insoweit bestehenden Probleme schlagen die Erfinder vor, das Fahrzeugsystem mit geeigneten Mitteln zur Detektion der entsprechenden Umgebungsbedingungen auszurüsten. Hierbei kann es sich beispielsweise um unmittelbare Sensoren am Fahrzeug handeln, welche beispielsweise die Sonneneinstrahlung messen. Zusätzlich oder alternativ kann es jedoch auch möglich sein, Wetterdaten aus einer Datenbank abzurufen, beispielsweise unter Verwendung einer für das Fahrzeug verfügbaren GPS-Information, um daraus die Umgebungstemperatur oder ähnliche Parameter abzuleiten. Ausgehend von diesen Informationen ist es möglich, zur Vermeidung von Fehlinterpretationen das erfindungsgemäße Verfahren beispielsweise auszusetzen, bis die Wetterdaten wieder in einem vorgegebenen Toleranzbereich liegen. Alternativ ist es auch möglich, die vorbestimmte Änderung der Temperaturdifferenz, welche zur Feststellung der Temperaturanomalie notwendig ist, in Abhängigkeit von den Wetterdaten anzupassen, sodass beispielsweise in Sommermonaten mit hoher Sonneneinstrahlung eine höhere Differenz eingefordert wird, um auf eine Temperaturanomalie zu schließen, welche durch eine ungleichmäßige mechanische Belastung ausgelöst sein könnte. Bevorzugt ist ein erfindungsgemäßes Verfahren, wobei das Fahrzeugsystem Mittel zur Detektion von Wetterdaten und/oder zum Abruf von Wetterdaten aus einer Datenbank, insbesondere der Sonneneinstrahlung, umfasst. Bevorzugt ist insoweit auch ein erfindungsgemäßes Verfahren, wobei die vorgegebene Änderung der Temperaturdifferenz in Abhängigkeit von den detektierten oder abgerufenen Wetterdaten angepasst wird, und/oder wobei die Erkennung der Temperaturanomalie nicht erfolgt, wenn die detektierten oder abgerufenen Wetterdaten außerhalb eines vorgegebenen Zulässigkeitsintervalls liegen.

Um Fehlalarme im Stand oder während des Rangierens zu vermeiden, die beispielsweise durch eine starke einseitige Sonneneinstrahlung verursacht werden können, schlagen die Erfinder zudem vor, das Erkennen einer Temperaturanomalie an die Bedingung zu koppeln, dass das Fahrzeug mit einer gewissen Mindestgeschwindigkeit fährt, bei der eine entsprechende Temperaturdifferenz infolge einer ungleichmäßigen mechanischen Belastung vorstellbar wäre. Bevorzugt ist ein erfindungsgemäßes Verfahren, wobei die Temperaturanomalie des Systemfahrzeugreifens nur erkannt wird, wenn die zeitabhängige Temperaturdifferenzbewertungsgröße ΔTB(t3) anzeigt, dass eine vorgegebene absolute Änderung der Temperaturdifferenz und/oder eine vorgegebene relative Änderung der Temperaturdifferenz, zwischen der gemessenen ersten Reifentemperatur T₁ und der gemessenen zweiten Reifentemperatur T₂ zu einem Zeitpunkt vorliegt, bei dem sich das Fahrzeug mit einer Fahrzeuggeschwindigkeit von 10 km/h oder mehr, bevorzugt von 20 km/h oder mehr, besonders bevorzugt 50 km/h oder mehr, bewegt, wobei die Fahrzeuggeschwindigkeit bevorzugt mittels eines im Systemfahrzeugreifen angeordneten Beschleunigungssensor ermittelt wird.

Die Erfinder haben erkannt, dass das erfindungsgemäße Verfahren infolge der dabei aufgenommenen Daten ausgezeichnet dafür geeignet ist, das Erkennen der Temperaturanomalie in Verfahrensschritt b) durch den Einsatz von maschinellem Lernen zu realisieren. Hierfür kann ein auf maschinellem Lernen basierendes Bewertungsmodul eingesetzt werden, welches mittels überwachtem Lernen anhand von bekannten Temperaturdifferenzbewertungsgrößen von Systemfahrzeugreifen mit oder ohne Temperaturanomalie daraufhin trainiert werden kann, entsprechende Temperaturanomalien zu identifizieren, welche durch ungleichmäßige mechanische Belastung ausgelöst werden. Geeignete Ausgangssoftware, aus denen sich ein entsprechendes auf maschinellem Lernen basierendes Bewertungsmodul erhalten lässt, sind mittlerweile von zahlreichen Anwendern kommerziell erhältlich und können vom Fachmann durch das geeignete Training an die Erfordernisse der vorliegenden Erfindung angepasst werden. Der notwendige Satz an Trainingsdaten ist dabei vom Fachmann relativ leicht zu erstellen, da entsprechend ausgerüstete Systemfahrzeugreifen lediglich am Fahrzeug positioniert werden müssen, wobei gezielt mechanische Belastungen eingestellt werden können, beispielsweise durch Einstellen eines Schräglaufs.

Zur Verringerung der Größe des Trainingssets, welches für eine zuverlässige Erkennung wünschenswert ist, kann das auf maschinellem Lernen basierende Bewertungsmodul fahrzeug- und/oder systemfahrzeugreifenspezifisch ausgeführt werden. In Übereinstimmung mit dem fachmännischen Verständnis bedeutet dies, dass sämtliche Trainingsdaten von einer begrenzten Zahl von Fahrzeugen erfasst werden, potenziell lediglich einem Fahrzeugtyp, wobei zusätzlich oder alternativ auch die Art der Fahrzeugreifen eingeschränkt werden kann, beispielsweise auf einen einzigen Reifenhersteller oder einen Reifentypus, beispielsweise Winterreifen. In Übereinstimmung mit dem fachmännischen Verständnis ist das daraus resultierende Bewertungsmodul im erfindungsgemäßen Verfahren dann insbesondere dazu geeignet, Temperaturanomalien in entsprechenden Fahrzeugsystemen mit dem Fahrzeugtyp beziehungsweise dem Reifentyp vorzunehmen. Bevorzugt ist ein erfindungsgemäßes Verfahren, wobei das Erkennen einer Temperaturanomalie des Systemfahrzeugreifens durch Auswertung der zeitabhängigen Temperaturdifferenzbewertungsgröße ΔTB(t3) mit der elektronischen Datenverarbeitungsvorrichtung mittels eines auf maschinellem Lernen basierenden Bewertungsmodul erfolgt, welches auf einer Speichereinheit der elektronischen Datenverarbeitungsvorrichtung gespeichert ist, wobei die elektronischen Datenverarbeitungsvorrichtung dazu eingerichtet ist, die zeitabhängige Temperaturdifferenzbewertungsgröße ΔTB(t3) als Eingabe in das Bewertungsmodul zu geben, wobei das Bewertungsmodul dazu trainiert ist, aus der zeitabhängige Temperaturdifferenzbewertungsgröße ΔTB(t3) eine Temperaturanomalie des Systemfahrzeugreifens zu erkennen, wobei das Bewertungsmodul hierfür mittels überwachtem Lernen mit einem Trainingssatz trainiert wurde, wobei der Trainingssatz eine Vielzahl von zeitabhängigen Temperaturdifferenzbewertungsgröße ΔTB(t3) von Systemfahrzeugreifen mit bekanntem Ausmaß der Temperaturanomalie umfasst, welche im Betrieb in Fahrzeugsystemen beim Betrieb der Fahrzeuge ermittelt wurden, wobei ein Teil der Systemfahrzeugreifen des Trainingssatzes eine Temperaturanomalie aufweist.

Zur Steigerung der Betriebssicherheit des Fahrzeuges und zur Vermeidung von möglicherweise irreparablen Schäden ist es zweckmäßig, eine erkannte Temperaturanomalie nicht lediglich nur zu registrieren, sondern auch eine geeignete Reaktionsmaßnahme auszulösen, wobei neben der Warnung des Fahrzeugführers insbesondere auch das Auslösen eines Wartungsauftrages vorteilhaft ist, um beispielsweise eine Fehlstellung im Fahrwerk zu korrigieren. Bevorzugt ist ein erfindungsgemäßes Verfahren, zusätzlich umfassend den Verfahrensschritt:
c) Auslösen einer oder mehrerer Reaktionsmaßnamen, wenn die Temperaturanomalie des Systemfahrzeugreifens erkannt wird.

Bevorzugt ist insoweit ein erfindungsgemäßes Verfahren, wobei die eine oder die mehreren Reaktionsmaßnamen ausgewählt sind aus der Gruppe bestehend aus Ausgabe eines optischen Warnsignals, Ausgabe eines akustischen Warnsignals und Übermittlung eines Wartungsauftrags an eine Wartungseinrichtung.

Die Erfindung betrifft zudem ein Fahrzeugsystem für den Einsatz in einem erfindungsgemäßen Verfahren, umfassend:
I) ein Fahrzeug,
II) zwei oder mehr am Fahrzeug angeordnete Fahrzeugluftreifen, wobei zumindest einer der Fahrzeugluftreifen ein Systemfahrzeugreifen ist,
   wobei der Systemfahrzeugreifen eine für den Fahrbahnkontakt vorgesehene Lauffläche aufweist und im Inneren einen Reifeninnenraum ausbildet,
   wobei der Systemfahrzeugreifen eine im Reifeninnenraum am Systemfahrzeugreifen angeordnete erste elektronische Temperatursensoreinheit zur Messung einer ersten Reifentemperatur T₁ umfasst,
   wobei der Systemfahrzeugreifen eine im Reifeninnenraum am Systemfahrzeugreifen angeordnete zweite elektronische Temperatursensoreinheit zur Messung einer zweiten Reifentemperatur T₂ umfasst,
   wobei die erste elektronische Temperatursensoreinheit und die zweite elektronische Temperatursensoreinheit bezogen auf die axiale Richtung des Systemfahrzeugreifens auf unterschiedlichen Seiten der orthogonal zur axialen Richtung stehenden, zentral durch den Systemfahrzeugreifen verlaufenden Ebene AE angeordnet sind, und
III) eine elektronische Datenverarbeitungsvorrichtung, wobei das Fahrzeugsystem dazu eingerichtet ist, dass die gemessene erste Reifentemperatur T₁ und die gemessene zweite Reifentemperatur T₂ an die elektronische Datenverarbeitungsvorrichtung übermittelt werden können,
   wobei die elektronische Datenverarbeitungsvorrichtung dazu eingerichtet ist, aus einer gemessenen zeitabhängigen ersten Reifentemperatur T₁ (t1) und einer zeitabhängigen zweiten Reifentemperatur T₂(t2) eine zeitabhängige Temperaturdifferenzbewertungsgröße ΔTB(t3) zu ermitteln, und
   wobei die elektronische Datenverarbeitungsvorrichtung dazu eingerichtet ist, eine Temperaturanomalie des Systemfahrzeugreifens durch Auswertung der zeitabhängigen Temperaturdifferenzbewertungsgröße ΔTB(t3) zu erkennen, wenn die zeitabhängige Temperaturdifferenzbewertungsgröße ΔTB(t3) anzeigt, dass zumindest eine vorgegebene Änderung der Temperaturdifferenz, zwischen der gemessenen ersten Reifentemperatur T₁ und der gemessenen zweiten Reifentemperatur T₂ vorliegt.

Bevorzugt ist ein erfindungsgemäßes Fahrzeugsystem, wobei die elektronische Datenverarbeitungsvorrichtung dazu eingerichtet ist, eine oder mehrere Reaktionsmaßnamen auszulösen, wenn die Temperaturanomalie des Systemfahrzeugreifens erkannt wird.

Die Erfindung betrifft ebenfalls einen Systemfahrzeugreifen für den Einsatz in einem erfindungsgemäßen Verfahren und/oder einem erfindungsgemäßen Fahrzeugsystem, wobei der Systemfahrzeugreifen eine für den Fahrbahnkontakt vorgesehene Lauffläche aufweist und im Inneren einen Reifeninnenraum ausbildet, wobei der Systemfahrzeugreifen eine im Reifeninnenraum am Systemfahrzeugreifen angeordnete erste elektronische Temperatursensoreinheit zur Messung einer ersten Reifentemperatur T₁ umfasst, wobei der Systemfahrzeugreifen eine im Reifeninnenraum am Systemfahrzeugreifen angeordnete zweite elektronische Temperatursensoreinheit zur Messung einer zweiten Reifentemperatur T₂ umfasst, wobei die erste elektronische Temperatursensoreinheit und die zweite elektronische Temperatursensoreinheit bezogen auf die axiale Richtung des Systemfahrzeugreifens auf unterschiedlichen Seiten der orthogonal zur axialen Richtung stehenden, zentral durch den Systemfahrzeugreifen verlaufenden Ebene AE angeordnet sind.

Nachfolgend werden die Erfindung und bevorzugte Ausführungsformen der Erfindung unter Bezugnahme auf die beiliegenden Figuren näher erläutert und beschrieben. Dabei zeigen:
Fig. 1 eine schematische Querschnittsdarstellung durch einen erfindungsgemäßen Systemfahrzeugreifen in einer ersten Ausführungsform; und
Fig. 2 eine schematische Darstellung eines erfindungsgemäßen Systemfahrzeugreifens in der Seitenansicht einer zweiten Ausführungsform.

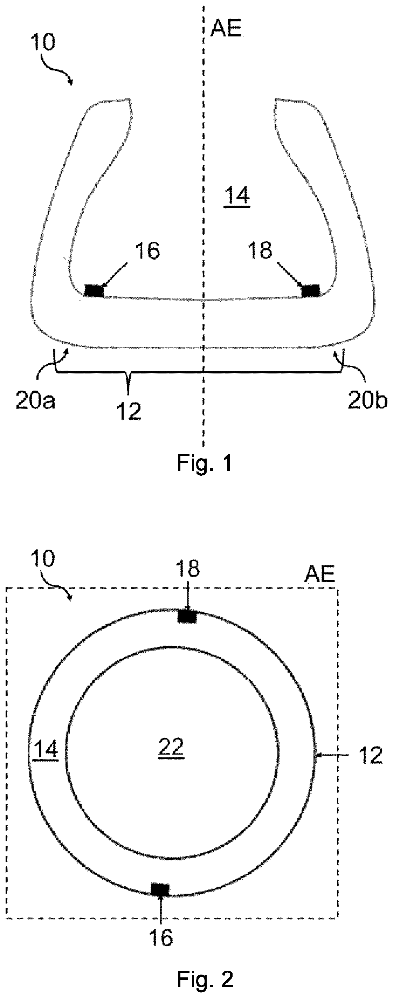

Fig. 1 visualisiert schematisch einen Schnitt durch einen erfindungsgemäßen Systemfahrzeugreifen 10 entlang einer durch die axiale und radiale Richtung aufgespannten Ebene. In Fig. 1 ist deutlich zu erkennen, dass es sich grundsätzlich um einen typischen Fahrzeugluftreifen handelt, der in seinem Inneren einen Reifeninnenraum 14 ausbildet und darüber hinaus über eine Lauffläche 12 verfügt, welche für den Fahrbahnkontakt vorgesehen ist. Im Reifeninnenraum 14 ist jedoch eine erste elektronische Temperatursensoreinheit 16 am Systemfahrzeugreifen 10 angeordnet. Quasi spiegelbildlich auf der gegenüberliegenden Seite der Ebene AE, welche orthogonal auf der axialen Richtung steht und zentral durch den Systemfahrzeugreifen 10 verläuft, ist die zweite elektronische Temperatursensoreinheit 18 ebenfalls am Systemfahrzeugreifen 10 angeordnet. Sowohl die erste Temperatursensoreinheit 16 als auch die zweite Temperatursensoreinheit 18 sind unterhalb der Lauffläche 12 jeweils in den Seitenbereichen 20a, 20b angeordnet und an der nicht explizit gezeigten Reifeninnenschicht positioniert. Die erste elektronische Temperatursensoreinheit 16 und die zweite elektronische Temperatursensoreinheit 18 weisen im gezeigten Beispiel jeweils im Wesentlichen den gleichen Abstand von der Ebene AE auf, sind jedoch aus Darstellungsgründen nicht über den Umfang voneinander beabstandet.

Im Unterschied hierzu zeigt Fig. 2 eine Ausführungsform, in der der Systemfahrzeugreifen 10 auf eine Reifenfelge 22 aufgezogen ist, und in dem die erste elektronische Temperatursensoreinheit 16 und die zweite elektronische Temperatursensoreinheit 18 über den Umfang derart voneinander beabstandet sind, dass diese in der Draufsicht entlang der axialen Richtung einen Unterschied in der Winkelposition von etwa 180° aufweisen.

In Fig. 1 und 2 sind die erste elektronische Temperatursensoreinheit 16 und die zweite elektronische Temperatursensoreinheit 18 baugleich ausgeführt und umfassen jeweils eine elektronische Sende- und Empfangsvorrichtung zur Übermittlung von Daten in einem Funkverfahren, sowie einen integrierten Beschleunigungssensor, mit dem die Radialbeschleunigung des Systemfahrzeugreifens 10 gemessen werden kann. Mit den in Fig. 1 und 2 schematisch gezeigten Systemfahrzeugreifen 10 ist es möglich, die Reifentemperatur beim Betrieb des Fahrzeugs an der inneren und äußeren Reifenschulter zu ermitteln und aus der zeitlichen Entwicklung der Temperaturdifferenz im Betrieb des Fahrzeuges zu erkennen, ob eine Temperaturanomalie besteht, welche auf das Vorliegen einer ungleichmäßigen mechanischen Belastung hindeutet.

### Bezugszeichenliste

- 10: Systemfahrzeugreifen
- 12: Lauffläche
- 14: Reifeninnenraum
- 16: erste elektronische Temperatursensoreinheit
- 18: zweite elektronische Temperatursensoreinheit
- 20a, 20b: Seitenbereiche
- 22: Felge

- AE: Ebene

## Patentansprüche

1. Verfahren zur Erkennung einer Temperaturanomalie bei Fahrzeugluftreifen in einem Fahrzeugsystem, umfassend:
i) ein Fahrzeug,
ii) zwei oder mehr am Fahrzeug angeordnete Fahrzeugluftreifen, wobei zumindest einer der Fahrzeugluftreifen ein Systemfahrzeugreifen (10) ist,
wobei der Systemfahrzeugreifen (10) eine für den Fahrbahnkontakt vorgesehene Lauffläche (12) aufweist und im Inneren einen Reifeninnenraum (14) ausbildet,
wobei der Systemfahrzeugreifen (10) eine im Reifeninnenraum (14) am Systemfahrzeugreifen (10) angeordnete erste elektronische Temperatursensoreinheit (16) zur Messung einer ersten Reifentemperatur T₁ umfasst,
wobei der Systemfahrzeugreifen (10) eine im Reifeninnenraum (14) am Systemfahrzeugreifen (10) angeordnete zweite elektronische Temperatursensoreinheit (18) zur Messung einer zweiten Reifentemperatur T₂ umfasst,
wobei die erste elektronische Temperatursensoreinheit (16) und die zweite elektronische Temperatursensoreinheit (18) bezogen auf die axiale Richtung des Systemfahrzeugreifens (10) auf unterschiedlichen Seiten der orthogonal zur axialen Richtung stehenden, zentral durch den Systemfahrzeugreifen (10) verlaufenden Ebene AE angeordnet sind, und
iii) eine elektronische Datenverarbeitungsvorrichtung, wobei das Fahrzeugsystem dazu eingerichtet ist, dass die gemessene erste Reifentemperatur T₁ und die gemessene zweite Reifentemperatur T₂ an die elektronische Datenverarbeitungsvorrichtung übermittelt werden können,
umfassend die Verfahrensschritte:
a) Messen einer zeitabhängigen ersten Reifentemperatur T₁(t1) mit der ersten elektronischen Temperatursensoreinheit (16) und Messen einer zeitabhängigen zweiten Reifentemperatur T₂(t2) mit der zweiten elektronischen Temperatursensoreinheit (18) und ermitteln einer zeitabhängigen Temperaturdifferenzbewertungsgröße ΔTB(t3) aus den gemessenen ersten Reifentemperaturen T₁ und den gemessenen zweiten Reifentemperaturen T₂ mit der elektronischen Datenverarbeitungsvorrichtung, und
b) Erkennen einer Temperaturanomalie des Systemfahrzeugreifens (10) durch Auswertung der zeitabhängigen Temperaturdifferenzbewertungsgröße ΔTB(t3) mit der elektronischen Datenverarbeitungsvorrichtung, wobei die Temperaturanomalie des Systemfahrzeugreifens (10) erkannt wird, wenn die zeitabhängige Temperaturdifferenzbewertungsgröße ΔTB(t3) anzeigt, dass zumindest eine vorgegebene Änderung der Temperaturdifferenz, zwischen der gemessenen ersten Reifentemperatur T₁ und der gemessenen zweiten Reifentemperatur T₂ vorliegt.

2. Verfahren nach Anspruch 1, wobei das Verfahren ein Verfahren zur Erkennung einer ungleichmäßigen mechanischen Belastung bei Fahrzeugreifen in Folge einer ermittelten Temperaturanomalie ist, wobei Verfahrensschritt b) das Erkennen einer ungleichmäßigen mechanischen Belastung des Systemfahrzeugreifens, insbesondere eines Schräglaufs, ausgehend von der erkannten Temperaturanomalie umfasst.

3. Verfahren nach einem der Ansprüche 1 oder 2, wobei die erste elektronische Temperatursensoreinheit (16) in radialer Richtung unterhalb eines der Seitenbereiche (20a, 20b) der Lauffläche (12) angeordnet ist,
wobei die Seitenbereiche (20a, 20b) der Lauffläche (12) bezogen auf die Breite in axialer Richtung jeweils die äußeren 30 % umfassen
und/oder
wobei die zweite elektronische Temperatursensoreinheit (18) in radialer Richtung unterhalb eines der Seitenbereiche (20a, 20b) der Lauffläche (12) angeordnet ist, wobei die Seitenbereiche (20a, 20b) der Lauffläche (12) bezogen auf die Breite in axialer Richtung jeweils die äußeren 30 % umfassen.

4. Verfahren nach Anspruch 3, wobei die erste elektronische Temperatursensoreinheit (16) und die zweite elektronische Temperatursensoreinheit (18) in radialer Richtung unterhalb gegenüberliegender Seitenbereiche (20a, 20b) der Lauffläche (12) angeordnet sind.

5. Verfahren nach einem der Ansprüche 1 bis 4, wobei die erste elektronische Temperatursensoreinheit (16) und die zweite elektronische Temperatursensoreinheit (18) in der Betrachtung entlang der Rotationsachse Winkelpositionen aufweisen, die sich um 45° oder mehr unterscheiden.

6. Verfahren nach einem der Ansprüche 1 bis 5, wobei die zeitabhängigen Temperaturdifferenzbewertungsgröße ΔTB(t3) zu jedem Ermittlungszeitpunkt aus der aktuellsten gemessenen ersten Reifentemperatur T₁ und der aktuellsten gemessenen zweiten Reifentemperatur T₂ ermittelt wird.

7. Verfahren nach einem der Ansprüche 1 bis 6, wobei die Temperaturanomalie des Systemfahrzeugreifens (10) erkannt wird, wenn die zeitabhängige Temperaturdifferenzbewertungsgröße ΔTB(t3) anzeigt, dass eine vorgegebene absolute Änderung der Temperaturdifferenz und/oder eine vorgegebene relative Änderung der Temperaturdifferenz, zwischen der gemessenen ersten Reifentemperatur T₁ und der gemessenen zweiten Reifentemperatur T₂ vorliegt.

8. Verfahren nach einem der Ansprüche 1 bis 6, wobei das Erkennen einer Temperaturanomalie des Systemfahrzeugreifens durch Auswertung der zeitabhängigen Temperaturdifferenzbewertungsgröße ΔTB(t3) mit der elektronischen Datenverarbeitungsvorrichtung mittels eines auf maschinellem Lernen basierenden Bewertungsmodul erfolgt, welches auf einer Speichereinheit der elektronischen Datenverarbeitungsvorrichtung gespeichert ist, wobei die elektronischen Datenverarbeitungsvorrichtung dazu eingerichtet ist, die zeitabhängige Temperaturdifferenzbewertungsgröße ΔTB(t3) als Eingabe in das Bewertungsmodul zu geben,
wobei das Bewertungsmodul dazu trainiert ist, aus der zeitabhängige Temperaturdifferenzbewertungsgröße ΔTB(t3) eine Temperaturanomalie des Systemfahrzeugreifens zu erkennen, wobei das Bewertungsmodul hierfür mittels überwachtem Lernen mit einem Trainingssatz trainiert wurde, wobei der Trainingssatz eine Vielzahl von zeitabhängigen Temperaturdifferenzbewertungsgröße ΔTB(t3) von Systemfahrzeugreifen mit bekanntem Ausmaß der Temperaturanomalie umfasst, welche im Betrieb in Fahrzeugsystemen beim Betrieb der Fahrzeuge ermittelt wurden, wobei ein Teil der Systemfahrzeugreifen des Trainingssatzes eine Temperaturanomalie aufweist.

9. Fahrzeugsystem für den Einsatz in einem Verfahren nach einem der Ansprüche 1 bis 8, umfassend:
I) ein Fahrzeug,
II) zwei oder mehr am Fahrzeug angeordnete Fahrzeugluftreifen, wobei zumindest einer der Fahrzeugluftreifen ein Systemfahrzeugreifen (10) ist,
wobei der Systemfahrzeugreifen (10) eine für den Fahrbahnkontakt vorgesehene Lauffläche (12) aufweist und im Inneren einen Reifeninnenraum (14) ausbildet,
wobei der Systemfahrzeugreifen (10) eine im Reifeninnenraum (14) am Systemfahrzeugreifen (10) angeordnete erste elektronische Temperatursensoreinheit (16) zur Messung einer ersten Reifentemperatur T₁ umfasst,
wobei der Systemfahrzeugreifen (10) eine im Reifeninnenraum (14) am Systemfahrzeugreifen (10) angeordnete zweite elektronische Temperatursensoreinheit (18) zur Messung einer zweiten Reifentemperatur T₂ umfasst,
wobei die erste elektronische Temperatursensoreinheit (16) und die zweite elektronische Temperatursensoreinheit (18) bezogen auf die axiale Richtung des Systemfahrzeugreifens (10) auf unterschiedlichen Seiten der orthogonal zur axialen Richtung stehenden, zentral durch den Systemfahrzeugreifen (10) verlaufenden Ebene AE angeordnet sind, und
III) eine elektronische Datenverarbeitungsvorrichtung, wobei das Fahrzeugsystem dazu eingerichtet ist, dass die gemessene erste Reifentemperatur T₁ und die gemessene zweite Reifentemperatur T₂ an die elektronische Datenverarbeitungsvorrichtung übermittelt werden können,
wobei die elektronische Datenverarbeitungsvorrichtung dazu eingerichtet ist, aus einer gemessenen zeitabhängigen ersten Reifentemperatur T₁(t1) und einer zeitabhängigen zweiten Reifentemperatur T₂(t2) eine zeitabhängige Temperaturdifferenzbewertungsgröße ΔTB(t3) zu ermitteln, und
wobei die elektronische Datenverarbeitungsvorrichtung dazu eingerichtet ist, eine Temperaturanomalie des Systemfahrzeugreifens (10) durch Auswertung der zeitabhängigen Temperaturdifferenzbewertungsgröße ΔTB(t3) zu erkennen, wenn die zeitabhängige Temperaturdifferenzbewertungsgröße ΔTB(t3) anzeigt, dass zumindest eine vorgegebene Änderung der Temperaturdifferenz, zwischen der gemessenen ersten Reifentemperatur T₁ und der gemessenen zweiten Reifentemperatur T₂ vorliegt.

10. Systemfahrzeugreifen (10) für den Einsatz in einem Verfahren nach einem der Ansprüche 1 bis 8 und/oder einem Fahrzeugsystem nach Anspruch 9, wobei der Systemfahrzeugreifen (10) eine für den Fahrbahnkontakt vorgesehene Lauffläche (12) aufweist und im Inneren einen Reifeninnenraum (14) ausbildet, wobei der Systemfahrzeugreifen (10) eine im Reifeninnenraum (14) am Systemfahrzeugreifen (10) angeordnete erste elektronische Temperatursensoreinheit (16) zur Messung einer ersten Reifentemperatur T₁ umfasst, wobei der Systemfahrzeugreifen (10) eine im Reifeninnenraum (14) am Systemfahrzeugreifen (10) angeordnete zweite elektronische Temperatursensoreinheit (18) zur Messung einer zweiten Reifentemperatur T₂ umfasst, wobei die erste elektronische Temperatursensoreinheit (16) und die zweite elektronische Temperatursensoreinheit (18) bezogen auf die axiale Richtung des Systemfahrzeugreifens (10) auf unterschiedlichen Seiten der orthogonal zur axialen Richtung stehenden, zentral durch den Systemfahrzeugreifen (10) verlaufenden Ebene AE angeordnet sind.
